# EUROPEAN PATENT SPECIFICATION

(11) **EP 2 263 793 B1**
(45) Date of publication and mention of the grant of the patent: **11.04.2018**
(21) Application number: 10176354.8
(22) Date of filing: 19.02.2002
(51) Int. Cl.: B01J 19/18, B01J 19/24, C08F 2/01

(54) **PROCESS FOR LOOP POLYMERISATION REACTOR**
VERFAHREN FÜR EINEN SCHLEIFENPOLYMERISIERUNGSREAKTOR
PROCÉDÉ POUR UN RÉACTEUR DE POLYMÉRISATION EN BOUCLE

(43) Date of publication of application: 22.12.2010
(62) Divisional of application: 02704426.2
(73) Proprietor: CHEVRON PHILLIPS CHEMICAL COMPANY LP, The Woodlands, TX 77380 (US)
(72) Inventor: Kendrick, James A, Baton Rouge, LA 70818 (US); Towles, Thomas W, Baton Rouge, LA 70806 (US); Roger, Scott T, Baton Rouge, LA 70820 (US)
(74) Representative: Abel & Imray

(56) References cited:
- EP-A- 0 891 990
- WO-A-97/36942
- WO-A-99/60028
- US-A- 3 262 922
- US-A- 4 740 550
- US-B1- 6 319 997
- PATENT ABSTRACTS OF JAPAN vol. 011, no. 192 (C-429), 19 June 1987 (1987-06-19) & JP 62 013408 A (IDEMITSU PETROCHEM CO LTD), 22 January 1987 (1987-01-22)

## Description

### FIELD OF INVENTION

The present invention relates to a process for producing polymer in a continuous slurry loop reactor comprising feeding catalyst, monomer, and, optionally, at least one of co-monomer, co-catalyst, diluent, polymer modifier, or mixtures thereof into the reactor; wherein catalyst is fed into the reactor from multiple catalyst inlets; and recovering polymer from the reactor.

### BACKGROUND OF THE INVENTION

In many polymerization processes for the production of polymer, a polymerization effluent is formed which is a slurry of particulate polymer solids suspended in a liquid medium, ordinarily the reaction diluent and unreacted monomers. A typical example of such processes is disclosed in Hogan and Bank's U.S. Pat. No. 2,285,721. While the polymerization processes described in the Hogan document employs a catalyst comprising chromium oxide and a support, the present invention is applicable to any process producing an effluent comprising a slurry of particulate polymer solids suspended in a liquid medium comprising a diluent and unreacted monomer. Such reaction processes include those which have come to be known in the art as particle form polymerizations.

In most commercial scale operations, it is desirable to separate the polymer and the liquid medium comprising an inert diluent and unreacted monomers in such a manner that the liquid medium is not exposed to contamination so that the liquid medium can be recycled to the polymerization zone with minimal if any purification. A particularly favored technique that has been used heretofore is that disclosed in the Scoggin et al, U.S. Pat. No. 3,152,872, more particularly the embodiment illustrated in conjunction with Fig. 2 of that patent. In such processes the reaction diluent, dissolved monomers, and catalyst are circulated in a loop reactor wherein the pressure of the polymerization reaction is about 100 (6.9 x 10⁵ Nm⁻²) to 700 psia (48.5 x 10⁵ Nm⁻²). The produced solid polymer is also circulated in the reactor. A slurry of polymer and the liquid medium is collected in one or more settling legs of the slurry loop reactor from which the slurry is periodically discharged to a flash chamber wherein the mixture is flashed to a low pressure such as about 20 psia (1.4 x 10⁵ Nm⁻²) While the flashing results in substantially complete removal of the liquid medium from the polymer, it is necessary to recompress the vaporized polymerization diluent (i.e., isobutane) in order to condense the recovered diluent to a liquid form suitable for recycling as liquid diluent to the polymerization zone. The cost of compression equipment and the utilities required for its operation often amounts to a significant portion of the expense involved in producing polymer.

Some polymerization processes distill the liquified diluent prior to recycling to the reactor. The purpose of distillation is removal of monomers and light-end contaminants. The distilled liquid diluent is then passed through a treater bed to remove catalyst poisons and then on to the reactor. The equipment and utilities costs for distillation and treatment can be a significant portion of the cost of producing the polymer.

In a commercial scale operation, it is desirable to liquify the diluent vapors at minimum cost. One such technique used heretofore is disclosed in Hanson and Sherk's U.S. Pat. No. 4,424,341 in which an intermediate pressure flash step removes a significant portion of the diluent at such a temperature and at such a pressure that this flashed portion of diluent may be liquified by heat exchange instead of by a more costly compression procedure.

### BRIEF SUMMARY OF THE INVENTION

The present invention relates to a process for producing polymer in a continuous slurry loop reactor comprising feeding catalyst, monomer, and, optionally, at least one of co-monomer, co-catalyst, diluent, polymer modifier, or mixtures thereof into the reactor; wherein catalyst is fed into the reactor from multiple catalyst inlets and wherein at least one at monomer, co-monomer, co-catalyst, diluent, polymer modifier, process additive, or mixtures thereof is fed into the reactor from multiple feed inlets which are located within 45% of the points of symmetry of the loop reactor; and recovering polymer from the reactor.

In another embodiment in accordance with the invention, the process also comprises at least one circulator in the reactor. Preferably, the at least one circulator comprises a pump. Also preferably, the at least one circulator comprises a motor driven device to increase the pressure of the circulating slurry in the loop reactor.

In one embodiment in accordance with the invention, at least one of the catalyst inlets is located at the suction end of at least one circulator. In another embodiment in accordance with the present invention, at least one feed inlet is located at the discharge end of at least one circulator. Preferably, at least one catalyst inlet and at least one feed inlet are located at the suction end and discharge end, respectively, of the same circulator.

Generally, the catalyst inlets are located within 45% of the points of symmetry of the loop reactor. Preferably, the catalyst inlets are located within 25% of the points of symmetry of the loop reactor. More preferably, the catalyst inlets are located within 10% of the points of symmetry of the loop reactor. Most preferably, the catalyst inlets are located at the points of symmetry of the loop reactor.

Generally, the circulators are located within 45% of the points of symmetry of the loop reactor. Preferably, the circulators are located within 25% of the points of symmetry of the loop reactor. More preferably, the circulators are located within 10% of the points of symmetry of the loop reactor. Most preferably, the circulators are located at the points of symmetry of the loop reactor.

The feed inlets are located within 45% of the points of symmetry of the loop reactor Preferably, the feed inlets are located within 25% of the points of symmetry of the loop reactor. More preferably, the feed inlets are located within 10% of the points of symmetry of the loop reactor. Most preferably, the feed inlets are located at the points of symmetry of the loop reactor.

In accordance with another embodiment in accordance with the present invention, the loop reactor has a length of at least 750 feet (229m), preferably at least 1,000 feet (305m), and more preferably at least 1,400 feet (427m). In yet another embodiment in accordance with the present invention, the loop reactor has at least 6 legs, preferably at least 8 legs, and more preferably at least 12 legs. In yet another embodiment in accordance with the present invention, the loop reactor has a volume of at least 10,000 gallons (37900dm³), preferably at least 20,000 gallons (75800dm³), more preferably at least 35,000 gallons (132650dm³), and most preferably at least 40,000) (151600dm³) gallons.

In one embodiment in accordance with the present invention, the difference of the reactant monomer concentrations, measured in wt. %, taken at any two points along the loop reactor, is within 20% of the higher value. In a preferred embodiment, the difference of the reactant monomer concentrations, measured in wt. %, taken at any two points along the loop reactor, is within 10% of the higher value. In yet a more preferred embodiment, the difference of the reactant monomer concentrations, measured in wt. %, taken at any two points along the loop reactor, is within 5% of the higher value.

Another object of the present invention is to increase the reactor throughput by the use of continuous discharge and increased ethylene concentrations in the liquid medium, e.g., greater than or equal to 4 weight percent at reactor outlet, desirably from 4 weight percent to 8 weight percent, still more desirably from 5 weight percent to 7 weight percent. Settling legs limit ethylene concentrations due to an increased tendency to plug downstream equipment caused by accelerated reaction within the settling leg. A continuous polymerization effluent slurry flow allows ethylene concentrations to be limited only by the ethylene solubility in the liquid diluent in the reactor, thereby increasing the specific reaction rate for polymerization and increasing reactor throughput.

Another object of the present invention is to increase the weight percent (wt %) of polymer solids in the polymerization slurry circulating in the polymerization zone in the loop reactor. Desirably, the wt % of polymer solids in the polymerization slurry is greater than 45, more desirably, from 45 to 65, still more desirably from 50 to 65, and most desirably from 55 to 65.

Another object of the present invention is to increase the space time yield (STY), expressed in terms of pounds per hour-gallon (lbs/hr-gal) (1lb/hr-gal : 3.3 × 10⁻⁵ Kg s⁻¹ dm⁻³). Desirably, the STY is greater than 2.6, more desirably from 2.6 to 4.0, and most desirably from 3.3 to 4.0.

### BRIEF DESCRIPTION OF THE DRAWINGS

Figs. 1 and 2 are a schematic diagram illustrating an apparatus for continuously separating polymer solids from diluent and unreacted monomer.
Fig. 3 is an enlarged, cross sectional view of the discharge conduit with opening extending a distance into the loop reactor and the circulating polymerization slurry.
Fig. 4 is a schematic view of a pressure control system.
Fig. 5 is a schematic view of a loop reactor with multiple catalyst inlets, feed inlets, circulators, and discharge conduits.
Fig. 6 is a schematic illustrating an example of "points of symmetry" for three feed inlets.
Fig. 7 is a schematic illustrating one type of the bottom runs of the loop reactor.

### DETAILED DESCRIPTION OF THE INVENTION

As used herein, the term "polymerization slurry" means substantially a two phase composition including polymer solids and liquid circulating within the loop reactor. The solids include catalyst and a polymerized olefin, such as polyethylene. The liquids include an inert diluent, such as isobutane, with dissolved monomer, comonomer, molecular weight control agents, such as hydrogen, antistatic agents, antifouling agents, scavengers, and other process additives.

As used herein, the term "space time yield" (STY) means the production rate of polymer per unit of loop reactor volume or polymerization slurry volume.

As used herein, the term "catalyst productivity" means weight of polymer produced per weight of catalyst introduced into the loop reactor.

As used herein, the term "polymer residence time" means the average duration that a polymer particle remains within the loop reactor.

As used herein, the term "multiple" means more than one.

As used herein, the term "constant reaction kinetics" means the monomer concentrations, wt.%, taken at any two points along the loop reactor, to be within 20% of the higher value.

As used herein, "points of symmetry" means points that are equidistant along the entire length of the loop reactor. For example, for a loop reactor that is 1200 feet (366m) long, two points of symmetry would be spaced 600 feet (183m) apart, three points of symmetry would be, spaced 400 feet (122m) apart, four points of symmetry would be located 300 feet (91m) apart, etc. By way of non-limiting example, three catalyst inlets located at the points of symmetry of the reactor would be located 400 feet (122m) apart for a 1200 foot (366m) reactor. Further by way of non-limiting example, for a 1200 foot (366m) reactor, three feed inlets located within 25% of their points of symmetry would each be located within 25% of the 400 foot (122m) points of symmetry or from 300 (91m) to 500 feet (152m) apart, it being understood that one of more of these elements will not be equidistant from the others. For example, for a 1200 foot (366m) loop reactor having three catalyst inlets, it would within the scope of the present invention for a first and second catalyst inlet to be 400 feet (122m) apart, with the third inlet spaced 300 feet (91m) from the second catalyst inlet and 500 feet (152m) from the first.

As used herein, the term "flash slurry" means polymer solids containing entrained (absorbed) liquid medium and entrained flash vapor (if any) and/or such polymer solids slurried in "free-flowing" liquid medium.

The present invention is applicable to any mixture which comprises a slurry of polymer solids and a liquid medium comprising an inert diluent and unreacted polymerizable monomers including slurries resulting from olefin polymerization. The olefin monomers generally employed in such reactions desirably include 1-olefins having from 2 up to 8 carbon atoms per molecule. Typical examples include ethylene, propylene, butene, pentene, hexene and octene. Other examples include vinyl aromatic monomers, like styrene and alkylsubstituted styrene, geminally distributed monomers such as isobutylene and cyclic olefins, such as norbornene and vinyl norbornene. Typical diluents employed in such olefin polymerizations include saturated aliphatic hydrocarbons having 3 to 8, preferably 3 to 4 carbon atoms per molecule, such as propane, isobutane, propylene, n-butane, n-pentane, isopentane, n-hexane, isooctane, and the like. Of these diluents those of 3 to 4 carbon atoms per molecule are preferred, and isobutane is most preferred.

According to one embodiment in accordance with the present invention, the rate of discharge of the polymerization effluent is such as to allow a continuous process stream from the slurry loop reactor from the point of discharge of the liquified polymerization effluent through a single point discharge valve and also through the first flash tank and the associated vapor recovery and solids recovery systems. The rate of discharge of the polymerization effluent is such as to maintain a constant pressure in the slurry reactor and to eliminate intermittent high pressure pulses associated with a discharge of a portion of the reactor contents that occurs with settling legs on slurry reactors.

The temperature to which the polymerization effluent which is discharged from the reactor is heated during transit to the first flash tank for vaporization is below the fusion temperature of the polymer- This may be accomplished by appropriate heating of this first transfer conduit. The quantity of heat to be supplied to the polymerization effluent during its transit through this first conduit to the first flash tank should preferably be at least equal to that quantity of heat which equals the heat of vaporization of that quantity of inert diluent which is to be flash vaporized in the first flash tank. This then will provide for the concentrated polymer solids formed in the first flash tank to be passed to the second flash tank to pass thereto at a higher solids temperature and thus facilitates the removal of residual diluent in the pores of such polymer solids by the operation of the second flash tank. That quantity of heat transferred to the polymerization effluent during its transit through the first transfer conduit to the first flash tank may even be greater, provided only that the quantity of heat so transferred will not cause the polymer solids therein to become heated to such a temperature at which they will tend to fuse or agglomerate one with another.

The concentrated polymer solids/slurry are discharged from the first flash tank into a first flash tank exit seal chamber of such a length (l) and diameter (d) so as to provide a volume sufficient to maintain a volume of concentrated polymer solids/slurry sufficient to maintain a pressure seal in the exit seal chamber. The concentrated polymer solids/slurry are discharged from the exit seal chamber through an exit seal chamber reducer to a second transfer conduit which communicates the concentrated polymer solids/slurry as a plug flow to a second flash tank. The exit seal chamber reducer is defined by substantially straight sides inclined at an angle to that of horizontal equal to or greater than the angle of slide of the concentrated polymer solids/slurry.

The pressure for the first flash step will vary depending on the nature of the diluent and unreacted monomers and the temperature of the polymerization effluent. Typically, pressures in the range of from about 140 psia (9.7 x 10⁵ Nm⁻²) to about 315 (21.8 x 10⁵ Nm⁻²) psia can be employed; more preferably from about 200 psia (13.8 x 10⁵ Nm⁻²) to about 270 psia (18.7 x 10⁵ Nm⁻²), and most preferably from about 225 psia (15.6 x 10⁵ Nm⁻²) to about 250 psia (17.3 x 10⁵ Nm⁻²).

The heat exchanging fluid used to condense the vapor from the first flash step is at a temperature in the range of from about 65° F (18°C) to about 150° F (66°C). A preferred embodiment uses a heat exchange fluid at a temperature of from about 75° F (24° C) to about 140°F (60°C). A most preferred-embodiment uses a heat exchange fluid at a temperature of from about 85° F (29°C) to about 130°F (54°C)

Maintaining constant reaction kinetics is desirable when a large loop reactor is used. In a large loop reactor, the concentrations of the reactants, such as un-reacted monomers, are high at and just downstream of the feeding inlet. The concentrations of these reactants decrease along the loop length as the reaction goes on. This phenomenon creates reactant concentration gradients along the loop, which can result in lower production yield, final product quality problems, and reactor control difficulties. It is, accordingly, desirable to reduce these concentration gradients by using multiple feed inlets for the reactants. For similar reasons, it is desirable to have even distribution of catalyst, co-catalyst, polymer modifiers, and/or process additives by using multiple inlets therefor.

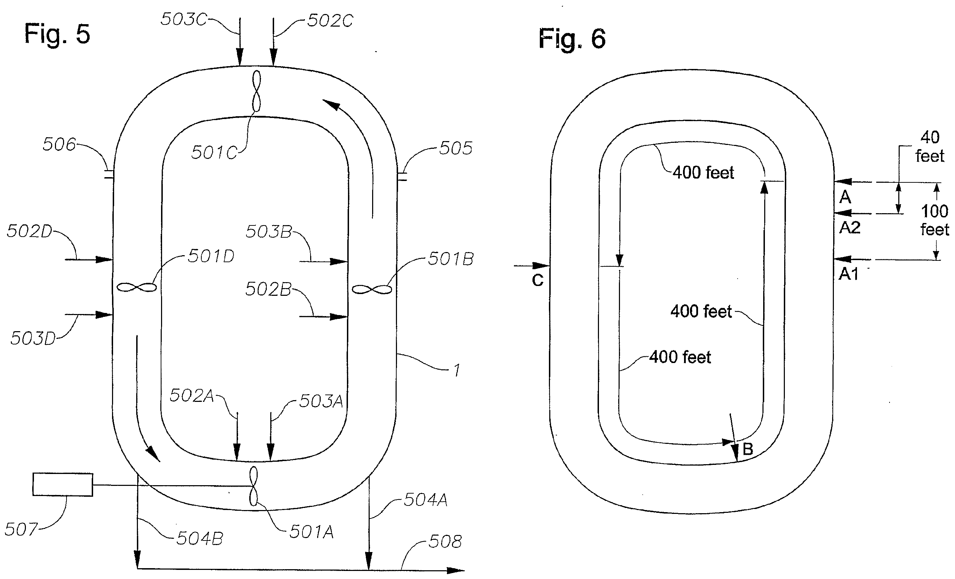

"Constant reaction kinetics" is defined herein as the difference of reactant monomer concentrations, measured in wt. %, taken at any two points along the loop reactor, to be within 20% of the higher value. As a non-limiting example illustrated in Fig. 5, two samples are taken from two sampling ports 505, 506 at the same time during the reaction and are analyzed for the concentrations of un-reacted ethylene. Two values are obtained: 4.0 wt. % and 3.5 wt.%. Therefore the difference of the two values is 0.5 wt. % and it is within the 20% of the higher value (20% of 4.0 wt.%). This indicates that the loop reactor has "constant reaction kinetics." The locations of the two sampling ports 505, 506 can be anywhere along the loop reactor. The method used for concentration analysis can be any known method as long as the same method is used for analyzing both samples.

One aspect of the present process is to produce polymer in a large continuous slurry loop reactor with catalyst fed into the loop reactor from multiple catalyst inlets, by way of non-limiting illustration, at 502A, 502B, 502C, 502D. The process also comprises multiple, feed inlets 503A, 503B, 503C, 503D for at least one of monomer, co-monomer, co-catalyst, diluent, polymer modifier, process additive, or mixtures thereof. The polymer modifiers can be used to change the polymer structure and properties. The process additives can be used to improve reactor operating efficiency such as to reduce static effect of running a large loop reactor. As would readily occur to one of ordinary skill in the art having the benefit of the present disclosure, many different co-monomers, co-catalysts, diluents, polymer modifiers, and process additives can be used in this process. For example, in a typical ethylene polymerization, ethylene can be fed through one or more of the feed inlets 503A, 503B, 503C, 503D in order to maintain a relatively constant ethylene concentration along the loop reactor 1. The process preferably also comprises at least one circulator 501A, 501B, 501C, and/or 501D in the loop reactor. More preferably the circulator is a pump and/or comprises a motor (507) driven device to increase the pressure of the circulating slurry in the loop reactor.

In one embodiment in accordance with the present invention, at least one of the catalyst inlets 502A, 502B, 502C, and/or 502D is located at the suction end of a circulator 501A, 501B, 501C, and/or 501D. At least one feed inlet 503A, 503B, 503C, and/or 503D is preferably located at the discharge end of at least one circulator. More preferably, there is at least one catalyst inlet and at least one feed inlet located at the suction end and discharge end, respectively, of the same circulator.

The locations of catalyst inlets, circulators, and feed inlets are strategically placed along the loop reactor to maintain constant reaction kinetics along the loop reactor, generally within 45%, preferably within 25%, more preferably within 10% of points of symmetry, and most preferably placed at their points of symmetry. "Points of symmetry" means points that are equidistant along the entire length of the loop reactor. For example, for a loop reactor that is 1200 feet (366m) long, two points of symmetry would be spaced 600 feet (133m) apart, three points of symmetry would be space 400 feet (122m) apart, four points of symmetry would be located 300 feet (91m) apart, etc. By way of non-limiting example, three catalyst inlets located at the points of symmetry of the reactor would be located 400 feet (122m) apart for a 1200 foot (366m) reactor.

This can further be understood by way of non-limiting illustration in Fig. 6. Fig. 6 illustrates a 1200 foot (366m) reactor wherein the points of symmetry (A, B, C) are 400 feet (122m) apart. The distance between A and A1 is 25% of the 400 feet (122m) i.e. 100 feet (30m) The distance between A and A2 is 10% of the 400 feet,(122m) i.e. 40 feet (12m). Three feed inlets located within 25% of their points of symmetry would each be located within 25% of the 400 foot (122m) foot points of symmetry or from 300 (91m) (between A1-B) to 500 (between C-Al) feet (152m). apart. It is understood that one or more of these elements will not be equidistant from the others. For example, for a 1200 foot (366m) loop reactor having three catalyst inlets, it would within the scope of the present invention for a first and second catalyst inlet to be 400 feet (122m) apart, with the third inlet spaced 300 feet (91m) from the second catalyst inlet and 500 feet (152m) from the first.

The loop reactor length can be at least 750 feet (229m), preferably at least 1,000 feet; (305m) and more preferably at least 1,400 feet (427m). Independently, the loop reactor can have at least 6 legs, preferably at least 8 legs, and more preferably at least 12 legs. Also independently, the loop reactor can also be at least 10,000 gallons (37900dm³), preferably at least 20,000 gallons (75800dm³), more preferably at least 35,000 gallons (132650dm³), and most preferably at least 40,000 gallon (151600dm³) in volume.

Turning again to Fig. 5, for example, to strategically locate 4 circulators 501A, 501B, 501C, 501D along a 1,000 feet (305m) long loop reactor 1, the points of symmetry of the 4 circulators are 250 feet (75m) apart. The most preferred location of circulators 501A, 501B, 501C, 501D are at the points of symmetry. The 4 circulators will be about 250 feet apart from each other. The catalyst inlets 502A, 502B, 502C, 502D and feed inlets 503A, 503B, 503C, 503D are also, ideally, spaced evenly at their points of symmetry along the loop reactor and preferably at the suction and discharge ends of the same circulator. While Fig. 5 illustrates an example wherein each of the 4 circulators has a catalyst inlet and a feed inlet at the circulator's suction and discharge ends, respectively, it need not be so in operation. Constant reaction kinetics can be achieved by operating a number of combinations of circulator, catalyst inlet, and feed inlet, arrangements as will readily occur to one of ordinary skill in the art having the benefit of the present disclosure. For example, constant reaction kinetics can be achieved in some applications with two circulators, three catalyst inlets, and four feed inlets.

Although "constant reaction kinetics" is defined as the difference of the reactant monomer concentrations, measured in wt. %, taken at any two points along the loop reactor, to be within 20% of the higher value, it is preferred that the difference of the two reactant monomer concentrations is within 10% of the higher value, more preferably within 5% of the higher value. This can be accomplished by strategically placing the catalyst inlets, feed inlets and circulators as disclosed above and by operating a number of combinations of circulator, catalyst inlet, and feed inlet, arrangements as will readily occur to one of ordinary skill in the art having the benefit of the present disclosure.

Another embodiment of the present invention involves producing polymer in a continuous slurry loop reactor which comprises: reacting a monomer in a hydrocarbon diluent to form a polymerization slurry of polymer solids in a liquid medium; discharging a portion of the polymerization slurry as effluent which comprises a slurry of discharged polymer solids in a discharged liquid medium through at least two discharge conduits; combining the effluent from at least two of the discharge conduits; flashing the combined effluent in a first flash to form a first flash vapor and a first flash slurry; and condensing at least a portion of the first flash vapor without compression. A non-limiting schematic illustration of the multiple discharge conduits is shown as 504A and 504B of Fig. 5. Preferably, the discharge of slurry effluent through at least one discharge conduit 504A and 504B is continuous and more preferably the discharge of slurry effluent through at least two discharge conduits is continuous. With multiple discharge conduits, the production can continue even when one discharge conduit is taken out of service.

Also preferably, the effluent from all discharge conduits is combined into a single transfer conduit 508. It is understood that the aspect of multiple slurry discharge can be considered alone or in combination with all other aspects of the present invention described herein.

The discharge conduits are strategically placed along the loop reactor, generally within 45%, preferably within 25%, more preferably within 10% of points of symmetry, and most preferably placed at their points of symmetry. Fig. 5 illustrates a design where two discharge conduits 504A and 504B are located at or near the bottom run of the loop reactor 1. At least one bottom run of the loop reactor is preferably a 180° bend. While more discharge conduits could be provided on each bend, it is preferable that the at least two discharge conduits are each located within a separate. 180° bend bottom run in the reactor, i.e., one discharge conduit per one bottom run. The slurry from both discharge conduits are preferably combined into one transfer conduit 508.

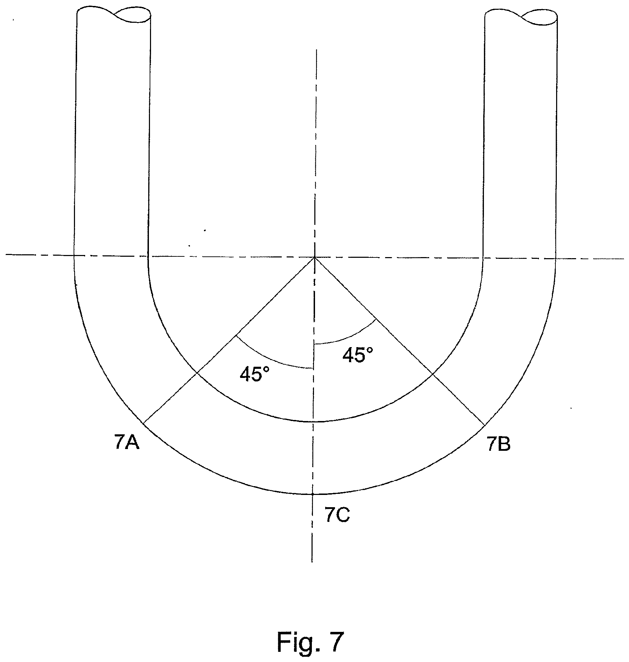

As shown in Fig. 7, the discharge conduit is preferably located within 45° of the center (7C) of the bottom run (between 7A and 7B). Preferably, the location is within 25° of the center of the 180° bend. More preferably, the discharge conduit is within 10° of the center of the 180° bend. Most preferably, the discharge conduit is located at the center of the 180° bend (7C).

As described above, the loop reactor length can be at least 750 feet (229m), preferably at least 1,000 feet (305m), and more preferably at least 1,400 feet (427m). Independently, the loop reactor can have at least 6 legs, preferably at least 8 legs, and more preferably at least 12 legs. Also independently, the loop reactor can also be at least 10,000 gallons (37900dm³) preferably at least 20,000 gallons (75800dm³), more preferably at least 35,000 gallons (1326500dm³), and most preferably at least 40,000 gallons (151600dm³) in volume. In one embodiment in accordance with the present invention with all the disclosed features, a loop reactor having a length of greater than 1,350 (411m), preferably greater than 1,400 (427m), more preferably greater than 1,450 feet (442m), can be effectively operated. In another preferred embodiment, a loop reactor having greater than 8 legs, preferably greater than 10 legs, more preferably greater than 12 legs, can be effectively operated.

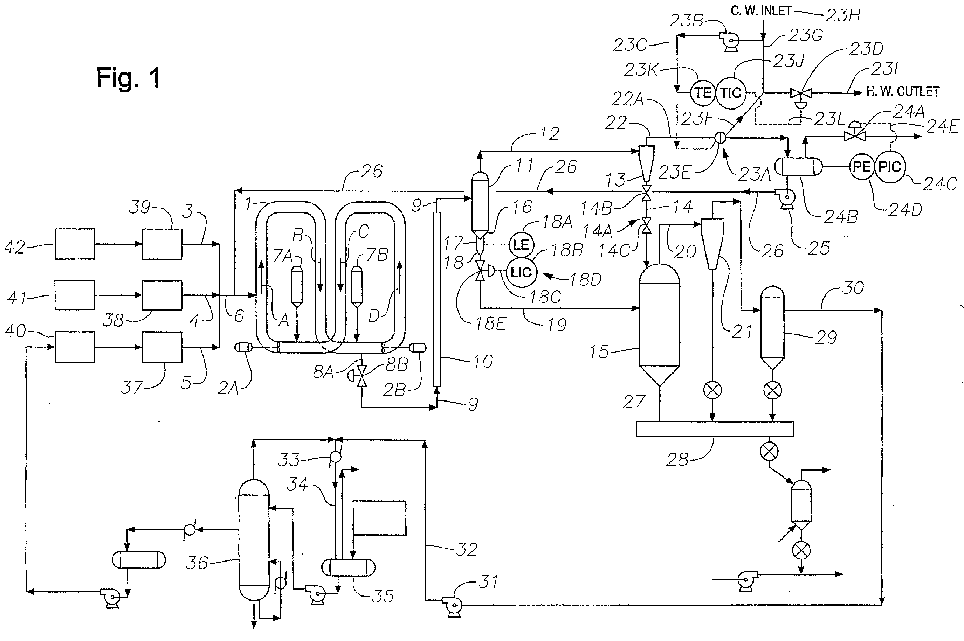

A further understanding of some other aspects of the present invention will be provided by referring to Fig. 1.

In the embodiment illustrated in Fig. 1, the polymerization is carried out in a loop reactor 1. It will be understood that while the loop reactor 1 is illustrated with four vertical legs, the loop reactor 1 may be equipped with more legs, desirably eight or more legs, desirable between 8 and 20, more desirable between 8 and 16, most desirable with 12 legs. The polymerization slurry is directionally circulated throughout the loop reactor 1 as illustrated by arrows A-D by one or more pumps, such as axial flow pumps, 2A and 2B. Desirably, the loop reactor 1 is equipped with multiple pumps wherein each pump is dedicated to an even number of legs, such as for example, four legs, six legs, eight legs, etc. Diluent comonomer and monomer are introduced into the loop reactor 1 from the diluent storage vessel 40, the comonomer storage vessel 41, and the monomer source 42 through their respective treater beds 37, 38, and 39 through conduits 5, 4 and 3, respectively, connected to conduit 6. Catalyst is added to the loop reactor 1 through one or more catalyst feed systems 7A and 7B.. Normally, catalyst is introduced in a hydrocarbon diluent.

Polymerization slurry may be removed from the loop reactor by continuous discharge through a discharge conduit 8A. It will be understood that the loop reactor 1 may be equipped with one or more discharge conduits 8A. It will be also understood that the discharge conduit(s) 8A may be operated in a continuous or discontinuous mode, but desirably a continuous mode. The discharge conduit 8A extends for a distance through a portion of the wall of the loop reactor 1 and into the circulating polymerization slurry. By extending for a distance into the polymerization slurry, the discharge conduit 8A may remove polymerization effluent from the circulating polymerization slurry over an area defined from near or adjacent the inside wall of the loop reactor 1 to a distance extending into the circulating polymerization slurry. In this way, a higher weight percentage of polymer solids may be formed within the conduit 8A and ultimately removed from the loop reactor 1 than the weight percentage of polymer solids within the otherwise circulating polymerization slurry. A pressure control system (not shown in Fig. 1) operates in concert with the discharge conduit 8A. The discharge conduit 8A and the pressure control system 410 are more clearly illustrated in Fig.s 3 and 4 and will be discussed in greater detail below.

The polymerization effluent passes from the discharge conduit 8A to the discharge valve 8B to a conduit 9 which is provided with a line heater 10 and into the first flash tank 11 which separates vaporized liquid medium from polymer slurry/solids. Conduit 9 has an indirect heat exchange means such as a flash line heater 10.

Vaporized liquid medium comprising diluent and unreacted monomers exit the first flash tank 11 via transfer conduit 12 through which it is passed into a separator, such as a cyclone, illustrated by reference number 13 which separates entrained polymer solids from the vapor. Polymer solids separated by the cyclone 13 are passed via conduit 14 through a dual valving assembly 14A designed to maintain a pressure seal below cyclone 13 to a lower pressure second flash tank 15.

The dual valving assemble 14A includes valves 14B and 14C. The valving assemble 14A in conjunction with conduit 14 operate to periodically discharge polymer solids which have collected in the conduit 14 from the cyclone 13. The valving assembly 14A also maintains the pressure differential between the higher pressure environment in the cyclone 13 and the lower pressure environment in the second flash tank 15. In the operation of the valving assembly 14A, valves 14B and 14C are sequentially opened and closed. At the beginning of this sequence, the valve 14B is open and the valve 14C is closed allowing the polymer solids from the cyclone 13 to collect in the conduit 14. Upon the passage of time and/or the collection of sufficient polymer solids in the conduit 14, the valve 14B closes capturing a portion of the high pressure environment from the cyclone 13 in the conduit 14. After the valve 14B closes, the valve 14C opens and the polymer solids collected in the conduit 14 are forcibly discharged into the flash tank 15 by the differential pressure between the higher pressure environment in conduit 14 and the lower pressure environment in the flash tank 15. After discharging the polymer solids from conduit 14 into the flash tank 15, the valve 14C closes. Once the valve 14C closes, the valve 14B is opened at which time polymer solids will again collect in conduit 14 from the cyclone 13. The above sequence is then repeated.

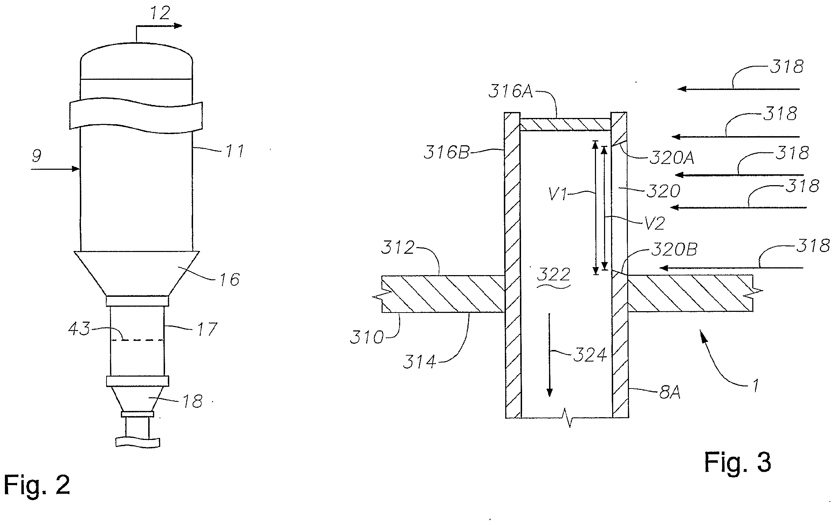

Referring back to the first flash tank 11, the concentrated polymer solids/slurry in the bottom of the first flash tank 11 continuously settles by sliding along the straight line bottom surface 16 thereof into the seal chamber 17 which is illustrated in enlargement Figure 2. A polymer solids/slurry level 43 is maintained in the seal chamber 17 to eliminate plugging tendencies in first flash tank 11 and to form a pressure seal so that the first flash tank 11 can operate at a substantially higher pressure than the second flash tank 15. Polymer slurry/solids are continuously discharged from the seal chamber 17 into the lower pressure second flash tank 15. The length (1), diameter (d), and volume of the seal chamber 17 and the geometry of the seal chamber exit reducer 18 are chosen so as to provide a variable residence time and provide a continuous plug flow of concentrated polymer solids/slurry to minimize "dead" space and reduce plugging tendencies. The seal chamber 17 length must be sufficient to allow particle (polymer solids) level measurement and control.

Particle level measurement and control may be accomplished by a nuclear level indicating system 18D. The nuclear level indicating system 18D includes a nuclear radiating source (not shown) and receiver or level element 18A in signal communication with a level indicating controller 18B. In operation, the level element 18A generates a signal proportional to the particulate level in the seal chamber 17. This signal is conveyed to the level indicating controller 18B. In response to this signal and a preset value, the level indicating controller 18B sends a signal through a conduit (illustrated by broken line 18C) to a control valve 18 E which selectively controls the discharge of polymer solids into a conduit 19.

Typical residence times of the concentrated polymer solid/slurry in the seal chamber 17 are from 5 seconds to 10 minutes, preferable residence times are from 10 seconds to 2 minutes and most preferable residence times from 15 - 45 seconds. The continuous plug flow of concentrated polymer solids/slurry forms a pressure seal wherein the concentrated polymer solids/slurry have an l/d ratio inside the seal chamber 17 which is typically 1.5 to 8, preferable l/d is 2 to 6 and most preferable is 2.2 to 3. Typically the seal chamber exit reducer 18 sides are inclined, relative to the horizontal, 60 - 85 degrees, preferable 65 - 80 degrees and most preferable 68 - 75 degrees. The seal chamber exit reducer 18 geometry is defined by substantially straight sides inclined at an angle to that of horizontal equal to or greater than the angle of slide of the concentrated polymer slurry/solids and communicates the concentrated polymer solid/slurry to a second transfer conduit 19 which communicates with a feed inlet of flash tank 15. In flash tank 15 substantially all of any remaining inert diluent and unreacted monomer in the concentrated polymerization effluent is vaporized and taken overhead via conduit 20 to a second cyclone 21.

Referring now to the cyclone 13, the major portion of the liquid medium in the polymerization effluent may be been taken to cyclone 13 as vapor. The vapor after having a portion of the entrained catalyst and polymer solids removed is passed via conduit 22 through a heat exchanger system 23A wherein the vapor at a pressure from about 140 psia to about 315 psia is condensed by indirect heat exchange with a heat exchange fluid such as to eliminate the need for compression. The portion of the entrained catalyst and polymer solids not removed by the cyclone 13 are generally smaller in size and may be referred to as "fines", "polymer fines" and/or "catalyst fines". These fines generally include unreacted and/or under-reacted catalyst.

The heat exchanger system 23A includes a heat exchanger 23E and a tempered water circulating pump 23B connected to the heat exchanger 23E by conduit 23C. A tempered water temperature control valve 23D is connected to the heat exchanger 23E and water circulating pump 23B by conduits 23F and 23G, respectively. Cooling water from a cooling water source (not shown) is conveyed via a cooling water conduit 23H into the conduit 23G between the control valve 23D and the circulating pump 23B. A temperature indicating controller (TIC) 23J is connected between the control valve 23D and the conduit 23C. Between the controller 23J and the conduit 23C resides a temperature element 23K.

The heat exchanger system 23A operates to control the amount of vapor condensed in the heat exchanger 23E. This is accomplished by controlling the flow of cooling water introduced into the conduit 23G from the conduit 23H by exhausting heated water formed in the heat exchanger 23E. The heated water from the heat exchanger 23E is conveyed to the control valve 23D via the conduit 23F. The heated water exits the control valve 23D via the conduit 23I.

More specifically, cooling water from the conduit 23H entering the conduit 23G mixes with circulating tempered water in the conduit 23G, the mixture thereof enters the pump 23B. The water exiting the pump 23B enters the conduit 23C, a portion of which contacts the temperature element 23K, in route to the heat exchanger 23E. The temperature element 23K generates an signal proportional to the temperature in conduit 23C. The signal is conveyed to the temperature indicating controller 23J. In response to this signal and a preset temperature value, the temperature indicating controller 23J sends a signal through a signal conduit (illustrated by the broken line 23L) to the control valve 23D which selectively controls the volume of heated water exiting the heat exchanger system 24A through the conduit 23I.

The condensed liquid medium formed at the heat exchanger 23E includes diluent, unreacted/under-reacted catalyst, polymer solids and unreacted monomers. This condensed liquid medium is then passed to an accumulator 24B via a conduit 22A.

It is desirable to control the amount of vapor condensed in the heat exchanger 23E and to maintain sufficient vapor pressure in the accumulator 24B. In this way, a pressure control valve 24A can maintain sufficient back pressure on the accumulator 24B. By maintaining a sufficient back pressure on the accumulator 24B, a proper operating pressure is maintained in the first flash tank 11. The pressure control valve 24A is actuated by a pressure indicating controller 24C in concert with a pressure element 24D. The pressure element 24D is in sensing communication with the accumulator 24B. The pressure element 24D generates an signal proportional to the pressure in the accumulator 24B. In response to this signal and a preset pressure value, the pressure indicating controller 24C sends a signal through a signal conduit (illustrated by the broken line 24E) to the control valve 24A which selectively controls the back pressure on the accumulator 24B.

A pump 25 is provided for conveying the condensed liquid medium from the accumulator 24B back to the polymerization zone by a conduit 26. In this way, the unreacted/under-reacted catalyst and polymer solids not removed by the cyclone 13 are returned for further polymerization to the loop reactor 1.

The polymer solids in the lower pressure second flash tank 15 are passed via a conduit 27 to a conventional dryer 28. The vapor exiting the secondary cyclone 21, after filtration in a filter unit 29, is passed by a conduit 30 to a compressor 31 and the compressed vapors are passed through a conduit 32 to a condenser 33 where vapor is condensed and the condensate is passed through conduit 34 to storage vessel 35. The condensed liquid medium in the storage vessel 35 is typically vented overhead for removal of light-end contaminants. The inert diluent can be returned to the process through a treater bed 37 to remove catalyst poisons or distilled in unit 36 for more complete removal of light-ends and then returned to the process through a treater bed.

Turning now to Fig. 3, a portion of a wall 310 of the loop reactor 1 through which the discharge conduit 8A extends is illustrated. The discharge conduit 8A may extend into the reactor at various angles. Desirably, the discharge conduit 8A extends into the loop reactor at substantially a right angle relative to the wall 310.

The wall 310 includes an inside surface 312 and an outside surface 314. The inside surface 312 supports the circulating polymerization slurry illustrated by directional arrows 318. The discharge conduit 8A has a top 316A, and a continuous side 316B. Portions of the side 316B define an opening 320. The opening 320 has a vertical opening dimensions v1 and v2 defined by walls 320A and 320B of the side 316B. Desirably, the v1 dimension is greater than the v2 dimension. The opening 320 has horizontal opening dimensions h1 and h2 (not shown). The opening 320 may be formed in any suitable shape, such as rectangular, oval, or a combination thereof. In one embodiment, the opening 320 may be conical-shaped or scooped shaped.

The opening 320 communicates with a channel 322 defined by the inside surfaces of the top 316A and the side 316B. The channel 322 conveys captured polymerization slurry, illustrated by directional arrow 324 to the discharge valve 8B (not shown).

The opening 320 is sized and positioned relative to the direction of movement of the circulating polymerization slurry 318. Desirably, the opening 320 is in a substantially facing position to the direction of the circulating polymerization slurry 318. More desirably, the opening 320 faces the direction of the circulating slurry 318. In this way, a portion of the polymerization slurry 324 containing polymer solids is removed from the circulating polymerization slurry 318 over an area from near or adjacent the inside wall 312 of the loop reactor 1 to a distance extending into the circulating polymerization slurry 318. In this way, a higher weight percentage of polymer solids may be formed within the conduit 8A than the weight percentage of polymer solids within the otherwise circulating polymerization slurry.

This weight percentage increase of polymer solids may depend upon the location of the discharge conduit 8A along the loop reactor 1, the insertion depth of the discharge conduit 8A within the loop reactor, the size and configuration of the opening 320, the orientation of the opening 320 relative to the direction of the circulating polymerization slurry, and the weight percentage of polymer solids in the circulating polymerization slurry 318. For example, between 1 to 5 weight percentage calculated increase is observed with a discharge conduit 8A having an v1 dimension of approximately 5 inches and a h1 dimension of approximately 1 inch (2.5cm). The discharge conduit 8A was positioned 10 ft downstream of a 90 degree bend in the loop reactor 1 in a portion of the loop reactor wall 314 adjacent the ground. The discharge conduit 8A extended approximately 5.5 inches (14.0cm) into the circulating polymerization slurry stream. The velocity of the circulating polymerization slurry was in the range of 28 to 34 ft/sec (8.5 to 10.3m/s) with weight percent of polymer solids in the range of 48 to 53.

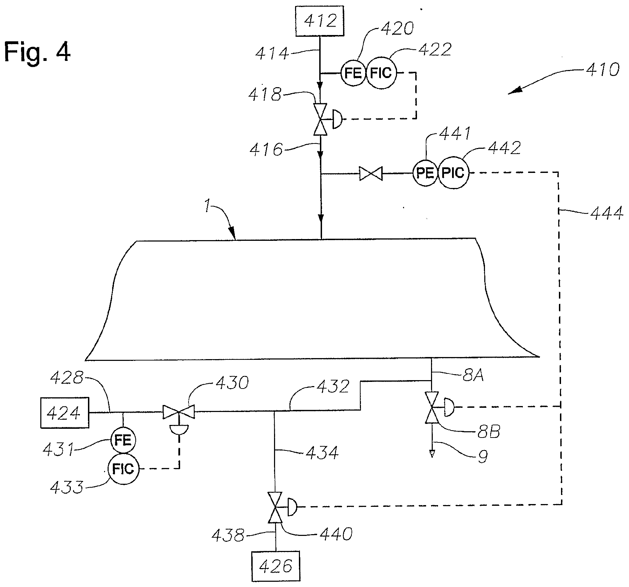

Turning now to Fig. 4, the pressure control system 410 is illustrated. The pressure control system 410 operates to maintain substantially uniform pressure within the loop reactor 1 by controlling the discharge of polymerization effluent from the loop reactor 1 via the discharge conduit 8A. The control system 410 also operates to prevent plugging of the discharge conduit 8A by polymer solids during pressure fluctuations within the loop reactor 1 and/or when the flow of polymerization effluent from the discharge conduit 8A to conduit 9 is interrupted and/or stopped.

The pressure control system 410 includes a first inert diluent source 412, such as isobutane; and an inert diluent conduit 414 in communication with a loop reactor conduit 416. The flow of inert diluent through the inert diluent conduit 414 to the loop reactor conduit 416 is controlled by the control valve 418 in concert with a flow element 420 and a flow indicator controller 422. The purpose of metering the flow of inert diluent from the first inert diluent source 412 to the loop reactor 1 is to prevent plugging of the conduit 416 by polymer solids. In this way, a loop reactor pressure element 441 (discussed below), in communication with the loop reactor conduit 416, may more accurately monitor the pressure in the loop reactor 1.

The pressure control system 410 further includes as second inert diluent source 424 and a third inert diluent source 426. Inert diluent, such as isobutane, from the second inert diluent source 424 flows into a conduit 428 towards a control valve 430 which is in fluid communication with a conduit 432. The control valve 430, in concert with a flow element 431 and a flow indicator controller 433, meters the flow of inert diluent from the second inert diluent source 424 into conduit 432. The conduit 432 is in fluid communication with a conduit 434 and the discharge conduit 8A, terminating in the discharge conduit 8A at a point between the loop reactor 1 and the discharge valve 8B. The purpose of metering the flow of inert diluent from the second inert diluent source 422 into the conduit 432 is to prevent plugging of the conduit 432 by polymer solids which might otherwise back flow into the conduit 432 from the discharge conduit 8A. Additionally, the flow of inert diluent from the second inert diluent source 422 also prevents plugging of the conduit 434 and the control valve 440 by polymer solids which might back flow into conduit 432 from the discharge conduit 8A.

Inert diluent from the third inert diluent source 426 flows into a conduit 438 towards a control valve 440 which is in fluid communication with conduit 434. As will be explained in greater detail below, in the event of a sufficient pressure fluctuation within the loop reactor 1, the control valve 440 operates to initiate a sufficient flow under sufficient pressure of inert diluent from the third inert diluent source 426 to purge and/or discharge polymer solids from the discharge conduit 8A into the loop reactor 1. In this instance, generally the flow of inert diluent from the third inert diluent source 426 into the conduit 432 will be greater than the flow of inert diluent from the second inert diluent source 424 into the conduit 432. For example, the flow of inert diluent from the second inert diluent source 424 to the discharge conduit 8A may be in a range of 0.5 to less than 2.0 gallons/min (0.03 to less than 1.3dm³ s⁻¹). The flow of inert diluent from the third inert diluent source 426 to the discharge conduit 8A may be in a range of 2.0 to 20 gallons/min (1.3 to 13dm³ s⁻¹).

The loop reactor pressure element 441 and a pressure indicating controller 442 perform several functions. As previously mentioned, the pressure element 441 monitors the loop reactor 1 pressure via the conduit 416. In response to this pressure, the loop reactor pressure element 441 generates an signal proportional to the pressure in conduit 416. This signal is conveyed to the pressure indicating controller 442. In response to this signal and a preset pressure value, the pressure indicating controller 442 sends a signal through a signal conduit (illustrated by the broken line 444) to the discharge valve 8B and the control valve 440.

During normal loop reactor operations, the discharge valve 8B is positioned to permit the flow of polymerization effluent from the discharge conduit 8A to conduit 9. At the same time, the control valve 440 is closed preventing the flow of inert diluent from the third inert diluent source 426 to the discharge conduit. When sufficient pressure fluctuations occur and/or when partial depressurization in the loop reactor 1 are detected by the loop reactor pressure element 441, the signal generated by the pressure indicating controller 442 causes the discharge valve 8B to close and the control valve 440 to open. By closing discharge valve 8B, thus interrupting the discharge from the loop reactor 1, pressure within the loop reactor 1 may be restored. By opening the control valve 440 and flowing sufficient volumes of inert diluent from the third inert diluent source 426 into the discharge conduit 8A under sufficient pressure, polymer solids remaining in the discharge conduit 8A between the discharge valve 8B and the loop reactor 1 may be flushed out of and/or purged from the discharge conduit 8A and into the loop reactor 1. Additionally, by maintaining a sufficient flow of inert diluent, continuous or otherwise, into and/or through the discharge conduit 8A while the discharge valve 8B is closed, the polymer solids within the loop reactor 1 are prevented from entering and/or substantially collecting in the discharge conduit 8A and/or plugging the discharge conduit 8A. Upon return of normal operations, the control valve 440 closes terminating the flow of inert diluent from the third inert diluent source 426 and the discharge valve 8B opens to resume the flow of polymerization effluent through the discharge conduit 8A into the conduit 9.

## Claims

1. A process for producing polymer in a continuous slurry loop reactor comprising:
feeding catalyst, monomer, and, optionally, at least one of co-monomer, co-catalyst, diluent, polymer modifier, or mixtures thereof into the reactor;
wherein catalyst is fed into the reactor from multiple catalyst inlets;
wherein at least one of monomer, co-monomer, co-catalyst, diluent, polymer modifier, process additive, or mixtures thereof, is fed into the reactor from multiple feed inlets which are located within 45% of the points of symmetry of the loop reactor; and
recovering polymer from the reactor.

2. The process according to claim 1, further comprising at least one circulator in the reactor.

3. The process of claim 2, wherein at least one of the catalyst inlets is located at the suction end of at least one circulator.

4. The process of claim 2, wherein the catalyst inlets are located within 45% of the points of symmetry of the loop reactor, preferably within 25% of the points of symmetry of the loop reactor and more preferably within 10% of the points of symmetry of the loop reactor.

5. The process of claim 4, wherein the catalyst inlets are located at the points of symmetry of the loop reactor.

6. The process of claim 2, wherein the circulators are located within 45% of the points of symmetry of the loop reactor, preferably within 25% of the points of symmetry of the loop reactor and more preferably within 10% of the points of symmetry of the loop reactor.

7. The process of claim 1, wherein the loop reactor has a length of at least 750 feet (229m).

8. The process according to claim 1, wherein the loop reactor has at least 6 legs.

9. The process according to claim 1, wherein the loop reactor has a volume of at least 10,000 gallons (37900 dm³).

10. The process of claim 1, comprising operating the loop reactor in such a manner to maintain constant reaction kinetics within the reactor.

11. The process of claim 10, further comprising at least one circulator.

## Patentansprüche

1. Verfahren zur Polymerherstellung in einem kontinuierlichen Slurry-Schlaufenreaktor, umfassend:
Befüllen des Reaktors mit Katalysator, Monomer und optional mindestens einem Co-Monomer, Co-Katalysator, Verdünnungsmittel, Polymermodifikator oder Gemischen davon;
wobei der Katalysator dem Reaktor über mehrere Katalysatoreinlässe zugeführt wird;
wobei mindestens ein Monomer, Co-Monomer, Co-Katalysator, Verdünnungsmittel, Polymermodifikator, Verfahrenszusatz oder Gemische davon dem Reaktor über mehrere Zufuhreinlässe zugeführt wird, die sich innerhalb 45% der Symmetriepunkte des Schlaufenreaktors befinden; und
Gewinnen von Polymer aus dem Reaktor.

2. Verfahren nach Anspruch 1, weiterhin umfassend mindestens einen Zirkulator in dem Reaktor.

3. Das Verfahren nach Anspruch 2, wobei mindestens einer der Katalysatorzuläufe am Saugende von mindestens einem Zirkulator angeordnet ist.

4. Verfahren nach Anspruch 2, wobei die Katalysatoreinlässe innerhalb 45% der Symmetriepunkte des Schlaufenreaktors, bevorzugt innerhalb 25% der Symmetriepunkte des Schlaufenreaktors und noch bevorzugter innerhalb 10% der Symmetriepunkte des Schlaufenreaktors angeordnet sind.

5. Verfahren nach Anspruch 4, wobei die Katalysatoreinlässe an den Symmetriepunkten des Schlaufenreaktors angeordnet sind.

6. Verfahren nach Anspruch 2, wobei die Zirkulatoren innerhalb 45% der Symmetriepunkte des Schlaufenreaktors, bevorzugt innerhalb 25% der Symmetriepunkte des Schlaufenreaktors und noch bevorzugter innerhalb 10% der Symmetriepunkte des Schlaufenreaktors angeordnet sind.

7. Verfahren nach Anspruch 1, wobei der Schlaufenreaktor eine Länge von mindestens 750 Fuß (229m) aufweist.

8. Das Verfahren nach Anspruch 1, wobei der Schlaufenreaktor mindestens 6 Beine aufweist.

9. Verfahren nach Anspruch 1, wobei der Schlaufenreaktor ein Volumen von mindestens 10.000 Gallonen (37.900dm³) aufweist.

10. Verfahren nach Anspruch 1, umfassend das Betreiben des Schlaufenreaktors in einer Weise, dass eine konstante Reaktionskinetik innerhalb des Reaktors aufrechterhalten wird.

11. Verfahren nach Anspruch 10, weiterhin mindestens einen Zirkulator umfassend.

## Revendications

1. Procédé de production de polymère dans un réacteur en boucle à combustible en suspension continue comprenant :
l'alimentation d'un catalyseur, d'un monomère, et facultativement, d'au moins un des co-monomère, co-catalyseur, diluant, modificateur de polymère, ou mélanges de ceux-ci dans le réacteur ;
dans lequel le catalyseur est alimenté dans le réacteur à partir d'entrées de catalyseur multiples ;
dans lequel au moins un des monomère, co-monomère, co-catalyseur, diluant, modificateur de polymère, additif de procédé, ou mélanges de ceux-ci, est alimenté dans le réacteur à partir d'entrées d'alimentation multiples qui sont situées dans 45 % des points de symétrie du réacteur en boucle ; et
la récupération du polymère dans le réacteur.

2. Procédé selon la revendication 1, comprenant en outre au moins un circulateur dans le réacteur.

3. Procédé selon la revendication 2, dans lequel au moins une des entrées de catalyseur est située au niveau de l'extrémité d'aspiration d'au moins un circulateur.

4. Procédé selon la revendication 2, dans lequel les entrées de catalyseur sont situées dans 45 % des points de symétrie du réacteur en boucle, préférablement dans 25 % des points de symétrie du réacteur en boucle et plus préférablement dans 10 % des points de symétrie du réacteur en boucle.

5. Procédé selon la revendication 4, dans lequel les entrées de catalyseur sont situées au niveau des points de symétrie du réacteur en boucle.

6. Procédé selon la revendication 2, dans lequel les circulateurs sont situés dans 45 % des points de symétrie du réacteur en boucle, préférablement dans 25 % des points de symétrie du réacteur en boucle et plus préférablement dans 10 % des points de symétrie du réacteur en boucle.

7. Procédé selon la revendication 1, dans lequel le réacteur en boucle possède une longueur d'au moins 750 pieds (229 m).

8. Procédé selon la revendication 1, dans lequel le réacteur en boucle possède au moins 6 étapes.

9. Procédé selon la revendication 1, dans lequel le réacteur en boucle possède un volume d'au moins 10 000 gallons (37 900 dm³).

10. Procédé selon la revendication 1, comprenant le fait de faire fonctionner le réacteur en boucle de manière à maintenir des cinétiques de réaction constantes au sein du réacteur.

11. Procédé selon la revendication 10, comprenant en outre au moins un circulateur.
